# EUROPEAN PATENT SPECIFICATION

(11) **EP 2 395 777 B1**
(45) Date of publication and mention of the grant of the patent: **01.08.2018**
(21) Application number: 10738564.3
(22) Date of filing: 03.02.2010
(51) Int. Cl.: H04W 8/02, H04W 84/10

(54) **DEVICE FOR REGISTERING MOBILE STATIONS IN WIRELESS COMMUNICATIONS AND PROGRAM**
GERÄT ZUR REGISTRIERUNG VON MOBILSTATIONEN IN DER DRAHTLOSEN KOMMUNIKATION UND PROGRAMM
DISPOSITIF D'ENREGISTREMENT DE STATIONS MOBILES DANS LES COMMUNICATIONS SANS FIL ET PROGRAMME

(30) Priority: 04.02.2009 JP 2009024177
(43) Date of publication of application: 14.12.2011
(73) Proprietor: NEC Corporation, Tokyo 108-8001 (JP)
(72) Inventor: TAKAGI, Kenki, Tokyo 108-8001 (JP)
(74) Representative: MacDougall, Alan John Shaw
(86) International application number: PCT/JP2010/051536
(87) International publication number: WO 2010/090233

(56) References cited:
- WO-A1-2008/052454
- JP-A- 2004 153 736
- JP-A- 2006 025 360
- JP-A- 2006 025 360
- US-A- 5 629 975
- US-A1- 2004 203 769
- US-A1- 2008 153 497

## Description

### TECHNICAL FIELD

### (Reference to Related Application)

The present application claims priority from Japanese Patent Application 2009-024177 (filed on February 4, 2009).

The present invention relates to a registration device, registration method, program, and base station for a mobile station in wireless communication, and more particularly to a registration device, registration method, program, and base station for a mobile station in a femtocell or other small cells.

### BACKGROUND ART

Recently, attention has been paid to a femtocell, a small cell in which the radio base station device of the Wideband Code Division Multiple Access (WCDMA) system is introduced into a home. A femtocell covers a small area such as a home or a small office (for example, SOHO).

In a femtocell, only limited the users such as family members or employees may use the base station. That is, the users can share the radio resources. Therefore, the user is able to perform data communication at a higher speed than in a mobile radio communication over a general network. In addition, discount rates services called femtozone services are provided to femtocell users.

To limit the users of the base station in a femtocell to those such as family members or employees, it is necessary to register in advance the users who have access to the base station. It is also necessary to provide a mechanism that inhibits the users other than those registered in advance from accessing the base station. In the base station, the information on the phone numbers and so on is registered in advance as the user information. When a mobile station transmits a call connection request, the base station references the assigned IMSI (International Mobile Subscriber Identity) to determine if the user has access to the base station. IMSI includes a phone number.

Patent Document 1 describes a radio communication system, in which the location information is transferred regularly between a radio base station and a mobile station to allow the radio base station to detect if the distance between the radio base station and the mobile station has changed.

Patent Document 1:
JP Patent Kokai Publication No. JP-P2002-111769A

JP 2006025360 describes a wireless network system capable of preventing various kinds of information from being carried out of a network. The wireless network system comprises an access point and radio units. The access point measures a communication distance with each of the radio units utilizing a period of time during which communication is not performed in a radio communication space, and determines contents of a communication service to be permitted for each of the radio units in accordance with the measured communication distance. Furthermore, the access point determines the contents of the communication service to be permitted for each of the radio units in accordance with whether or not terminal intrinsic information of each of the radio units is registered or not.

WO 2008/052454 describes a mobile communication method, a mobile communication system and an access entity. When the access entity performs location updating or access processes for the UE, the access entity determines whether the area where the UE is currently located is satisfied with a predetermined condition, and if satisfied, paging the UE in the paging area controlled by the access entity when paging the UE is needed.

US 2008/153497 describes a base station which detects a wireless communication device by intercepting an uplink communication signal intended for an originating base station. In response to the detection of the wireless communication device, the detecting base station sends a message to the core network. The detecting base station includes a mobile communication device detector configured to intercept the uplink communication signal transmitted from the wireless communication device to the originating base station of a communication network. A network interface within the detecting base station is configured to send a device proximity message to the communication network where the device proximity message is based on the proximity of the wireless communication device to the detecting base station. The device proximity message may be a handoff request, distance, or other information that is derived or otherwise related to the intercepted uplink communication signal.

US 2004/203769 describes when an operational mode of a mobile terminal is set to a memory mode, the location information of an area of a base station as a contacted party is registered. When the operational mode of a mobile terminal is set to a notification mode, a determination is made whether the base station as a contacted party is a base station in an unregistered area which is not registered into storage means. Then, when the contacted party is the base station in the unregistered area, any deviation from an activity range is sent to a registered contact.

### SUMMARY

The invention is set out in the appended set of claims. The embodiments and/or examples of the following description which are not covered by the appended claims are considered as not being part of the present invention.

The following analysis is given by the inventor of the present invention. The users who are allowed to access a femtocell base station must be registered in advance in the base station. In addition, the users other than those who have been registered cannot access the base station. Therefore, to allow the so-called guest user, such as a friend or an acquaintance who visits the home, to access the base station via the mobile phone of the guest user, the telephone number of each guest user must be registered in the base station before he or she makes a call.

If a guest user is not registered in the base station, the mobile station of the guest user cannot communicate with the femtocell that is the nearest cell but must communicate with a near macro-cell. In addition, while a femtocell user of the visited home is communicating with the femtocell base station, the electromagnetic wave of the communication of that user becomes an interfere wave of the mobile station of a guest user. This means that the mobile station of the guest user sometimes cannot receive the electric wave normally from the near macro-cell.

At the same time, another problem is that the owner of a femtocell base station feels burdensome to connect a PC to the femtocell base station via the LAN to register the telephone number of a guest user in the base station.

Even if a base station can detect the distance between the base station and a mobile station as described in Patent Document 1, the problem is that the base station cannot distinguish between a guest user to be authorized to access the base station and the other visitors based only on the distance between the base station and the mobile station. For example, though visitors such as a parcel deliveryman or a laundryman should not be given access to the base station, those visitors are mistakenly registered if access permission is determined based only on the distance between the base station and the mobile station.

To address this problem, there is a need in a femtocell or other small cells to properly determine whether a mobile station should be registered in the base station. The present invention provides a registration device and a program as set out in the appended claims.

A registration device in a first aspect of the present invention is a registration device that is configured to register a mobile station in a small cell, the registration device comprising a determination unit that is configured to determine if the mobile station is to be registered based on a distance to the mobile station and a length of stay of the mobile station and a length-of-stay calculation unit that is configured to calculate the length of stay of said mobile station based on a number of times a location registration request is transmitted from said mobile station to said registration device, wherein, if the location registration request is received a specified number of times or more from said mobile station within a predetermined distance, the registration device is configured to determine that said mobile station is to be registered.

It is preferable that a base station in a small cell has the registration device described above.

One example provides a mobile station that transmits a location registration request to a base station in a small cell wherein whether or not the mobile station is registered in the base station is determined by the base station based on a distance to the base station and a length of stay.

Another example provides device a radio communication base station device based on a cell method wherein, based on a distance to a mobile station and on a length of stay of the mobile station in a cell, the radio communication base station device determines if the mobile station may be registered.

Another example provides a registration method for registering a mobile station in a small cell, the registration method comprising a determination step of determining if the mobile station is to be registered based on a distance to the mobile station and a length of stay of the mobile station.

Another example provides a program that causes a computer to perform processing of registering a mobile station in a small cell, the program causing the computer to perform determination processing of determining if the mobile station is to be registered based on a distance to the mobile station and a length of stay of the mobile station.

The program described above may be recorded on any (computer readable) recording medium.

The registration device and program according to the present invention properly determine whether a mobile station is to be registered in a base station in a femtocell or other small cells.

### BRIEF DESCRIPTION OF THE DRAWINGS

FIG. 1 is a block diagram showing the configuration of a registration device according to an exemplary embodiment of the present invention.
FIG. 2 is a diagram showing the overview of a femtocell in a first example of the present invention.
FIG. 3 is a block diagram showing the configuration of a base station in the example of the present invention.
FIG. 4 is a flowchart showing the operation of the base station in the example of the present invention.

### PREFERRED MODES

### <Exemplary Embodiment>

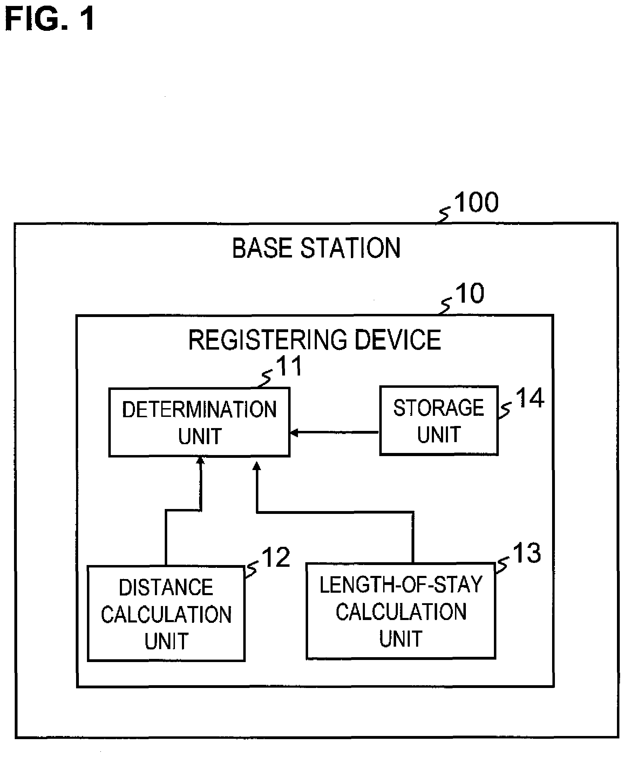

A registration device according to an exemplary embodiment of the present invention will be described below with reference to the drawings. FIG. 1 is a block diagram showing the configuration of a registration device in the present exemplary embodiment.

With Reference to FIG. 1, a registration device 10 comprises a determination unit 11, a distance calculation unit 12, a length-of-stay calculation unit 13, and a storage unit 14. The registration device 10 is a registration device used in a small cell to register a mobile station.

The determination unit 11 determines whether a mobile station is to be registered based on the distance to the mobile station and the length of stay of the mobile station. The determination of whether to register a mobile station based on both the distance and the length of stay properly determines whether to register the mobile station in the base station. This is because this determination method can distinguish between a guest user's mobile station to be authorized to access the base station and other user's mobile stations.

It is preferable for the determination unit 11 to determine to register a mobile station if the distance to the mobile station is within a predetermined distance. It is preferable for the determination unit 11 to register a mobile station if the length of stay of the mobile station is equal to or longer than a predetermined period. This is because a guest user tends to stay longer in a small cell than a visitor such as a parcel deliveryman or a laundryman.

The distance calculation unit 12 calculates the propagation delay from a mobile station and, based on the measured propagation delay, calculates the distance to the mobile station. The distance calculation unit 12 may also measure the propagation delay when a location registration request is received from the mobile station.

The length-of-stay calculation unit 13 calculates the length of stay of a mobile station based on the period of time during which a location registration request from the mobile station is continued. The length-of-stay calculation unit 13 may also calculate the length of stay of a mobile station based on the number of times a location registration request has been transmitted from the mobile station.

A location registration request from a mobile station may be an RRC (Radio Resource Control) connection request transmitted over a physical random access channel (PRACH).

The storage unit 14 stores the subscriber identifier included in a location registration request received from a mobile station. The determination unit 11 may also identify a mobile station based on a subscriber identifier stored in the storage unit 14. The subscriber identifier may be an international mobile subscriber identity (IMSI).

It is preferable that the base station 100 (FIG. 1) comprises the registration device 10 described above. This is because the base station 100, if used in a small cell, can properly determine whether a mobile station is to be registered in the base station 100.

### <First Example>

A first example of the present invention will be described below with reference to the drawings.

### (Configuration of first example)

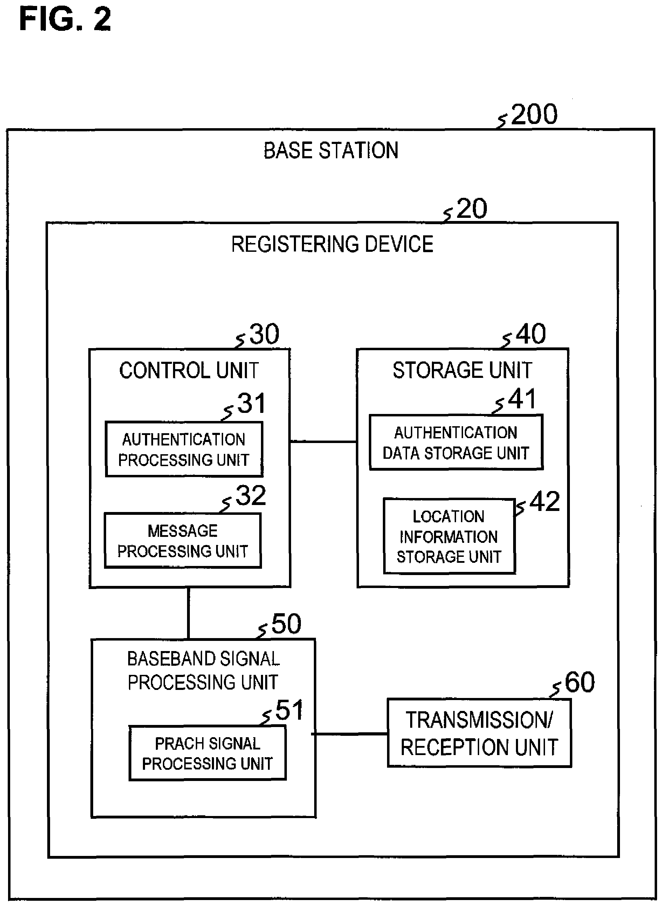

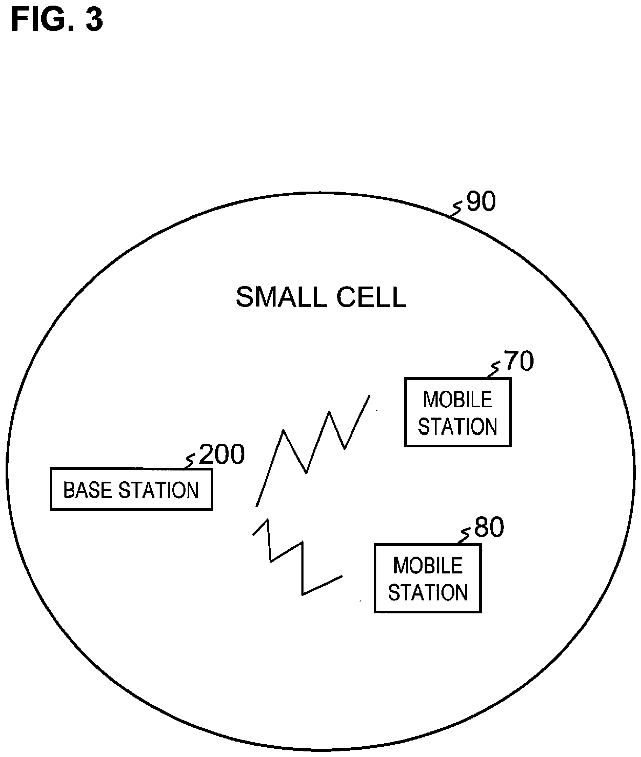

FIG. 3 is a diagram showing the overview of a small cell 90 in the present example. A base station 200 is the base station of the small cell 90. Assume that the small cell 90 includes a mobile station 70 and a mobile station 80. FIG. 2 is a block diagram showing the configuration of the base station 200 in the present example. The mobile station 70 is a registered mobile station authorized to access the base station 200.

Referring to FIG. 2, the base station 200 includes a registration device 20. The registration device 20 comprises a control unit 30, a storage unit 40, a baseband signal processing unit 50, and a transmission/reception unit 60.

The control unit 30 comprises an authentication processing unit 31 and a message processing unit 32. The storage unit 40 comprises an authentication data storage unit 41 and a location information storage unit 42. The baseband signal processing unit 50 comprises a PRACH signal processing unit 51. The control unit 30 accesses the storage unit 40.

The authentication information on the mobile station 70 is recorded in the authentication data storage unit 41 of the storage unit 40 in advance by the authentication processing unit 31 of the control unit 30. This authentication information enables the mobile station 70 to carry out communication via the base station 200.

The PRACH signal processing unit 51 receives the PRACH signal to measure the propagation delay at PRACH reception time between the base station 200 and the mobile station 70 and between the base station 200 and the mobile station 80.

The control unit 30 converts the measured propagation delay information to the distance information and records the resulting distance information in the location information storage unit 42. The message processing unit 32 analyzes messages received from the mobile station 70 and the mobile station 80 and extracts the authentication information (for example, IMSI) from the messages.

The transmission/reception unit 60 comprises an antenna and an amplifier (both not shown) for transmitting and receiving information to and from the mobile station 70 and the mobile station 80.

### (Description of operation)

Referring to FIG. 2, the following describes more in detail the operation for registering the mobile station 80, owned by a guest user, into the base station 200.

When the mobile station 80 enters the small cell 90 corresponding to the base station 200, the mobile station 80 transmits a location registration request (RRC connection request) to the base station 200.

The location registration information is transmitted via a channel called PRACH. The PRACH signal processing unit 51 processes (or analyzes) the received location registration information. The PRACH signal processing unit 51 measures the propagation delay between the mobile station 80 and the base station 200. This operation is defined by 3GPP (Third Generation Partnership Project) specification (TS25.435). When the RACH preamble (RACH message transmission permission request) is received from the mobile station 80, the PRACH signal processing unit 51 notifies the mobile station 80, via a channel called an AICH, that the mobile station 80 may transmit the RACH message. The mobile station 80, which has received transmission permission via the AICH, transmits the RACH message to the base station 200 within a predetermined time. Based on the difference between the AICH transmission time and the RACH message reception time, the base station 200 can measure the propagation delay between the base station 200 and the mobile station 80.

The base station 200 can estimate the distance between the base station 200 and the mobile station 80 based on the propagation delay caused by the mobile station 80. For example, the distance may be estimated through a table in which the propagation delays and the corresponding distances are stored. For example, the distance may be estimated in such a way that, when the propagation delay is x, the distance is in the range y meters to z meters.

The reason for calculating the distance between the base station 200 and the mobile station 80 is that the base station 200 installed in a general home may receive a location registration request also from outside the home. That is, the distance calculated as described above is used to distinguish between a location registration request transmitted from a third party walking outside the home and a location registration request transmitted from a guest user who is visiting the home.

The control unit 30 converts the propagation delay, measured by the PRACH signal processing unit 51, to the distance information (or location information) and records the converted information in the location information storage unit 42 of the storage unit 40.

The message processing unit 32 analyzes the location registration request (RRC connection request message) and temporarily stores the guest user's IMSI included in the message. The IMSI stored in this way is required when the registration of the guest user is finally permitted. The IMSI may also be used in the operation, which will be described later, to identify whether the location registration request is received from the same gust user.

Until the guest user who has transmitted the location registration request is identified as a guest user of the small cell 90 in which the base station 200 is installed, the base station 200 rejects the location registration request received from the mobile station 80 owned by the guest user and, at the same time, causes the mobile station 80 to transmit the location registration request repeatedly at a regular interval. This operation is implemented by controlling the timer value and the counter value that are notified from the base station to a mobile station as the notification information (System Information Block) as defined by 3GPP. That is, the base station 200 can cause its controlled mobile stations to transmit the location registration request a predetermined number of times (or for a fixed period) at a desired periodic interval.

The base station 200 causes the mobile station 80 to transmit the location registration request a multiple number of times for the following reason. For example, the length of stay of a person who visits a home for parcel delivery, cleaning delivery, or canvassing differs from the length of stay of a guest user. Therefore, the operation described above allows the base station 200 to determine that a person who has stayed in a home for a predetermined time or longer as a guest user.

If a location registration request is received a specified number of times or more (or for a period of time equal to or longer than a predetermined length) from the mobile station 80 of the same user who is within a predetermined distance, the base station 200 determines that the user is a guest user. The base station 200 records the IMSI of the user into the authentication data storage unit 41 of the base station 200 as a guest user and permits the user to issue a location registration request and to make a call connection.

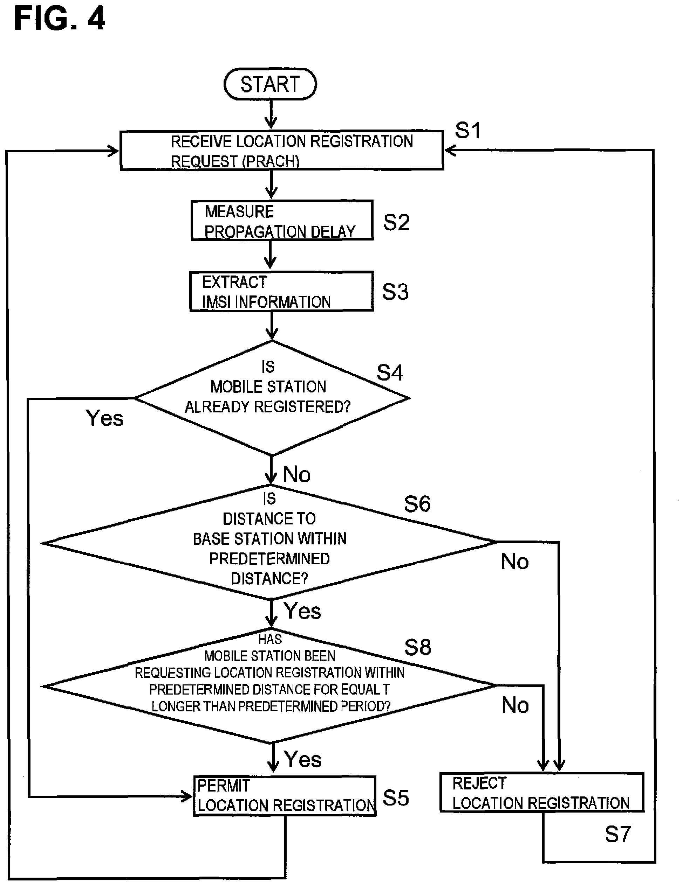

The following describes the operation described above with reference to the flowchart. FIG. 4 is a flowchart showing the operation of the base station 200 in the present example.

The transmission/reception unit 60 receives a location registration request (PRACH) from the mobile station 80 (step S1). The PRACH signal processing unit 51 measures the propagation delay for the mobile station 80 (step S2). At this time, the control unit 30 estimates the location of the mobile station 80 (or the distance between the mobile station 80 and the base station 200) based on the measured propagation delay.

The message processing unit 32 extracts the IMSI included in the location registration request (step S3). The base station 200 checks if the extracted IMSI is the IMSI of an already registered user (step S4). If the IMSI is the IMSI of an already registered user (Yes in step S4), the base station 200 permits the location registration of the mobile station 80 (step S5).

If the received IMSI is not the IMSI of a registered user (No in step S4), the base station 200 checks if the distance to the mobile station 80 that has transmitted the location registration request is within the predetermined distance (step S6). If the distance between the mobile station 80 and the base station 200 is not within the predetermined distance (No in step S6), the base station 200 determines that the user is not a guest user and rejects the location registration request from the mobile station 80 (step S7).

If the distance is within the predetermined distance and the location registration request is transmitted from the mobile station 80 (Yes in step S6), the base station 200 checks if the mobile station 80 has been transmitting the location registration request for a period equal to or longer than the predetermined period (step S8). If the mobile station 80 has been transmitting the location registration request for a period equal to or longer than the predetermined period (Yes in step S8), the base station 200 determines that the owner of the mobile station 80 is a guest user and permits the location registration request (step S5). On the other hand, if the period is shorter than the predetermined period (No in step S8), the base station 200 rejects the location registration request from the mobile station 80 (step S7) and waits until the next location registration request is received (step S1).

### (Description of effect)

When a user is registered in the base station 200, the user information (for example, IMSI of each mobile station) must be written in the storage unit 40 of the base station 200. However, it is bothersome for the owner of the base station to manually register the IMSI in the base station 200 each time a third party other than the family members is temporarily registered. In the present example, the base station 200 estimates the distance between a visitor's terminal and the base station 200 based on the propagation delay measured when a PRACH is received. In addition, the base station 200 estimates the length of stay of a visitor based on the number of times the RRC connection request, transmitted by a mobile station via the PRACH, is received. If the estimated distance and the length of stay satisfy the predetermine condition, the base station 200 automatically records the IMSI of the visitor in the storage unit 40 to allow the visitor to use the base station 200. This eliminates the need for the owner of the base station 200 to manually write the IMSI.

### <Second Example>

A second example of the present invention will be described below with reference to the drawings. The configuration of the base station in the present example is similar to that shown in FIG. 2. In the present example, the base station 200 automatically deletes the information on guest users recorded in the storage unit 40.

If the guest user information recorded in the authentication data storage unit 41 of the base station 200 is not deleted, the storage unit 40 requires a large amount of memory to record the ever-increasing amount of information on the guest users.

Actually, however, some of the guest users registered in the base station 200 visit the small cell 90 only once for several weeks, several months, or several years. Therefore, it is wasteful to increase the storage capacity of the storage unit 40 to hold the guest user information semi-permanently.

Therefore, if a guest user registered in the base station 200 does not transmits a call connection request or a location registration request to the base station 200 for a predetermined period (for example, several hours, several days, several weeks, or several months), it is desirable to delete the guest user from the database recorded in the storage unit 40.

In this case, the users whose registration is deleted after the predetermined period has elapsed should be limited to the users registered as guest users. On the other hand, the users registered in the base station 200 in advance (for example, family members of the home where the femtocell is located) should remain registered even after the predetermined period has elapsed. To do so, it is preferable that, in the database for registering user information, the guest users should be stored separately from the users registered in advance.

The exemplary embodiment and the examples may be changed and adjusted in the scope of the entire disclosure (including claims) of the present invention and based on the basic technological concept. In the scope of the claims of the present invention, various disclosed elements may be combined and selected in a variety of ways. That is, it is to be understood that the present invention includes various modifications and corrections that may be made by those skilled in the art according to the entire disclosure, including the claims, and the technical concept.

The present invention includes the inventions in the modes described below.

### (First mode)

There is provided a registration device in the first aspect described above.

### (Second mode)

In the registration device as described above, the determination unit may determine to register the mobile station if the distance to the mobile station is within a predetermined distance.

### (Third mode)

In the registration device as described above, the determination unit may determine to register the mobile station if the length of stay of the mobile station is not less than a length of a predetermined period.

### (Fourth mode)

The registration device as described above may further comprise a distance calculation unit that measures a propagation delay from the mobile station and calculates the distance to the mobile station based on the measured propagation delay.

### (Fifth mode)

In the registration device as described above, the distance calculation unit may measure the propagation delay when a location registration request is received from the mobile station.

### (Sixth mode)

The registration device as described above may further comprise a length-of-stay calculation unit that calculates the length of stay of the mobile station based on a period during which a location registration request from the mobile station is continued.

### (Seventh mode)

The registration device as described above may further comprise a length-of-stay calculation unit that calculates the length of stay of the mobile station based on a number of times a location registration request is transmitted from the mobile station.

### (Eighth mode)

In the registration device as described above, the location registration request from the mobile station may be an RRC connection request transmitted via a physical random access channel.

### (Ninth mode)

The registration device as described above may further comprise a storage unit that stores a subscriber's identifier included in the location registration request from the mobile station.

### (Tenth mode)

In the registration device as described above, the determination unit may identify the mobile station based on the subscriber's identifier stored in the storage unit.

### (Eleventh mode)

In the registration device as described above, the subscriber's identifier may be an IMSI (International Mobile Subscriber Identity).

### (Twelfth mode)

A base station may comprise the registration device as described above.

### (Thirteenth mode)

There is provided a mobile station in the second aspect described above.

### (Fourteenth mode)

In the mobile station as described above, if the distance to the base station is within a predetermined distance, the base station may determine to register the mobile station in the base station.

### (Fifteenth mode)

In the mobile station as described above, if the length of stay is not less than a length of a predetermined period, the base station may determines to register the mobile station in the base station.

### (Sixteenth mode)

There is provided a radio communication base station device in the third aspect described above.

### (Seventeenth mode)

If the distance to the mobile station is within a predetermined distance and the length of stay of the mobile station in the cell is not less than a length of a predetermined period, the radio communication base station device as described above may permit the registration of the mobile station.

### (Eighteenth mode)

The radio communication base station device as described above may measure a propagation delay from the mobile station and, based on the measured propagation delay, calculate the distance to the mobile station.

### (Nineteenth mode)

The radio communication base station device as described above may calculate the length of stay of the mobile station in the cell based on a period during which a location registration request from the mobile station is continued or on a number of times a location registration request is transmitted.

### (Twentieth mode)

There is provide a registration method as described in the fourth aspect described above.

### (Twenty-first mode)

In the registration method as described above, the determining may comprise determining to register the mobile station if the distance to the mobile station is within a predetermined distance.

### (Twenty-second mode)

In the registration method as described above, the determining may comprise determining to register the mobile station if the length of stay of the mobile station is not less than a length of a predetermined period.

### (Twenty-third mode)

The registration method as described above may further comprise measuring a propagation delay from the mobile station and calculating the distance to the mobile station based on the measured propagation delay.

### (Twenty-fourth mode)

In the registration method as described above, the measuring comprises measuring the propagation delay when a location registration request is received from the mobile station.

### (Twenty-fifth mode)

The registration method as described above may further comprise calculating the length of stay of the mobile station based on a period during which a location registration request from the mobile station is continued.

### (Twenty-sixth mode)

The registration method as described above may further comprise calculating the length of stay of the mobile station based on a number of times a location registration request is transmitted from the mobile station.

### (Twenty-seventh mode)

The registration method as described above may further comprise storing a subscriber's identifier included in the location registration request from the mobile station.

### (Twenty-eighth mode)

In the registration method as described above, the determining may comprise identifying the mobile station based on the subscriber's identifier stored in the storing.

### (Twenty-ninth mode)

There is provided a program in the fifth aspect of the present invention described above.

### (Thirtieth mode)

In the program as described above, the determining may comprise determining to register the mobile station if the distance to the mobile station is within a predetermined distance.

### (Thirty-first mode)

In the program as described above, the determining may comprise determining to register the mobile station if the length of stay of the mobile station is not less than a length of a predetermined period.

### (Thirty-second mode)

The program as described above may further cause a computer to perform measuring a propagation delay from the mobile station and calculating the distance to the mobile station based on the measured propagation delay.

### (Thirty-third mode)

In the program as described above, the distance measuring may comprise measuring the propagation delay when a location registration request is received from the mobile station.

### (Thirty-fourth mode)

The program as described above may further cause a computer to perform calculating the length of stay of the mobile station based on a period during which a location registration request from the mobile station is continued.

### (Thirty-fifth mode)

The program as described above may further cause a computer to perform calculating the length of stay of the mobile station based on a number of times a location registration request is transmitted from the mobile station.

### (Thirty-sixth mode)

The program as described above may further cause a computer to perform storing a subscriber's identifier, included in the location registration request from the mobile station, in a storage unit.

### (Thirty-seventh mode)

In the program as described above, the determining may comprise identifying the mobile station based on the subscriber's identifier stored in the storage unit.

### EXPLANATIONS OF SYMBOLS

- 10, 20: Registration device
- 11: Determination unit
- 12: Distance calculation unit
- 13: Length-of-stay calculation unit
- 14, 40: Storage unit
- 30: Control unit
- 31: Authentication processing unit
- 32: Message processing unit
- 41: Authentication data storage unit
- 42: Location information storage unit
- 50: Baseband signal processing unit
- 51: PRACH signal processing unit
- 60: Transmission/reception unit
- 70, 80: Mobile station
- 90: Small cell
- 100, 200: Base station

## Claims

1. A registration device (10) that is configured to register a mobile station (80) in a small cell (90), said registration device comprising:
a determination unit (11) that is configured to determine if said mobile station (80) is to be registered based on a distance to said mobile station (80) and a length of stay of said mobile station (80), and
a length-of-stay calculation unit (13) that is configured to calculate the length of stay of said mobile station (80) based on a number of times a location registration request is transmitted from said mobile station (80) to said registration device (10),
wherein if the location registration request is received a specified number of times or more from said mobile station (80) within a predetermined distance, the registration device (10) is configured to determine that said mobile station (80) is to be registered.

2. The registration device (10) as defined by claim 1, wherein
said determination unit (11) is configured to determine to register said mobile station (80) if the distance to said mobile station (80) is within a predetermined distance.

3. The registration device (10) as defined by claim 1 or 2, wherein
said determination unit (11) is configured to determine to register said mobile station (80) if the length of stay of said mobile station (80) is not less than a length of a predetermined period.

4. The registration device (11) as defined by one of claims 1-3, further comprising:
a distance calculation unit (12) that is configured to measure a propagation delay from said mobile station (80) and to calculate the distance to said mobile station (80) based on the measured propagation delay.

5. The registration device (10) as defined by claim 4, wherein
said distance calculation unit (12) is configured to measure the propagation delay when a location registration request is received from said mobile station (80).

6. The registration device (10) as defined by one of claims 1-5, further comprising:
a length-of-stay calculation unit (13) that is configured to calculate the length of stay of said mobile station (80) based on a period during which a location registration request from said mobile station is continued.

7. The registration device (10) as defined by one of claims 5-6, wherein
the location registration request from said mobile station (80) is an Radio Resource Control, RRC, connection request transmitted via a physical random access channel.

8. The registration device (10) as defined by one of claims 1-7, further comprising:
a storage unit (40) that is configured to store a subscriber's identifier included in the location registration request from said mobile station (80).

9. The registration device (10) as defined by claim 8, wherein
said determination unit (11) is configured to identify said mobile station (80) based on the subscriber's identifier stored in said storage unit (14).

10. A communication system comprising a registration device (10) according to any of claims 1 to 9 and a mobile station (80) and wherein whether or not said mobile station (80) is registered by said registration device (10) is determined based on a distance between said registration device (10) and said mobile station (80) and a length of stay.

11. A computer program product comprising computer implementable instructions for causing a programmable computer device to become configured as the registration device (10) of any of claims 1 to 9.

## Patentansprüche

1. Registriervorrichtung (10), die dafür konfiguriert ist, eine Mobilstation (80) in einer kleinen Zelle (90) zu registrieren, wobei die Registriervorrichtung aufweist:
eine Bestimmungseinheit (11), die dafür konfiguriert ist, basierend auf einem Abstand zur Mobilstation (80) und einer Aufenthaltsdauer der Mobilstation (80) zu bestimmen, ob die Mobilstation (80) registriert werden soll, und
einer Aufenthaltsdauerberechnungseinheit (13), die dafür konfiguriert ist, die Aufenthaltsdauer der Mobilstation (80) basierend auf der Anzahl von Übertragungen einer Standortregistrierungsanforderung von der Mobilstation (80) an die Registriervorrichtung (10) zu berechnen,
wobei die Registriervorrichtung (10) dafür konfiguriert ist, zu bestimmen, dass die Mobilstation (80) registriert werden soll, wenn die Standortregistrierungsanforderung innerhalb eines vorgegebenen Abstands mindestens eine vorgegebene Anzahl von Malen von der Mobilstation (80) empfangen wird.

2. Registriervorrichtung (10) nach Anspruch 1, wobei
die Bestimmungseinheit (11) dafür konfiguriert ist, zu bestimmen, dass die Mobilstation (80) registriert wird, wenn der Abstand zur Mobilstation (80) innerhalb eines vorgegebenen Abstands liegt.

3. Registriervorrichtung (10) nach Anspruch 1 oder 2, wobei
die Bestimmungseinheit (11) dafür konfiguriert ist, zu bestimmen, dass die Mobilstation (80) registriert wird, wenn die Aufenthaltsdauer der Mobilstation (80) nicht kürzer ist als eine vorgegebene Zeitdauer.

4. Registriervorrichtung (11) nach einem der Ansprüche 1 bis 3, ferner mit:
einer Abstandsberechnungseinheit (12), die dafür konfiguriert ist, eine Laufzeitverzögerung von der Mobilstation (80) zu messen und den Abstand zur Mobilstation (80) basierend auf der gemessenen Laufzeitverzögerung zu berechnen.

5. Registriervorrichtung (10) nach Anspruch 4, wobei die Abstandsberechnungseinheit (12) dafür konfiguriert ist, die Laufzeitverzögerung zu messen, wenn eine Standortregistrierungsanforderung von der Mobilstation (80) empfangen wird.

6. Registriervorrichtung (10) nach einem der Ansprüche 1 bis 5, ferner mit:
einer Aufenthaltsdauerberechnungseinheit (13), die dafür konfiguriert ist, die Aufenthaltsdauer der Mobilstation (80) basierend auf einer Zeitdauer zu berechnen, während der eine Standortregistrierungsanforderung von der Mobilstation aufrechterhalten wird.

7. Registriervorrichtung (10) nach Anspruch 5 oder 6, wobei die Standortregistrierungsanforderung von der Mobilstation (80) eine RRC- (Radio Resource Control) Verbindungsanforderung ist, die über einen physikalischen Direktzugriffskanal übertragen wird.

8. Registriervorrichtung (10) nach einem der Ansprüche 1 bis 7, ferner mit:
einer Speichereinheit (40), die dafür konfiguriert ist, eine Teilnehmerkennung zu speichern, die in der Standortregistrierungsanforderung von der Mobilstation (80) enthalten ist.

9. Registriervorrichtung (10) nach Anspruch 8, wobei
die Bestimmungseinheit (11) dafür konfiguriert ist, die Mobilstation (80) basierend auf der in der Speichereinheit (14) gespeicherten Teilnehmerkennung zu identifizieren.

10. Kommunikationssystem mit einer Registriervorrichtung (10) nach einem der Ansprüche 1 bis 9 und einer Mobilstation (80), wobei basierend auf einem Abstand zwischen der Registriervorrichtung (10) und der Mobilstation (80) und einer Aufenthaltsdauer bestimmt wird, ob die Mobilstation (80) durch die Registriervorrichtung (10) registriert wird oder nicht.

11. Computerprogrammprodukt mit durch einen Computer implementierbaren Anweisungen, die einen programmierbaren Computer veranlassen, als die Registriervorrichtung (10) nach einem der Ansprüche 1 bis 9 konfiguriert zu werden.

## Revendications

1. Dispositif d'enregistrement (10) qui est configuré pour enregistrer une station mobile (80) dans une petite cellule (90), ledit dispositif d'enregistrement comprenant :
une unité de détermination (11) qui est configurée pour déterminer si ladite station mobile (80) doit être enregistrée sur la base d'une distance jusqu'à ladite station mobile (80) et d'une durée de séjour de ladite station mobile (80), et
une unité de calcul de durée de séjour (13) qui est configurée pour calculer la durée de séjour de ladite station mobile (80) sur la base d'un nombre de fois qu'une requête d'enregistrement de localisation est transmise de ladite station mobile (80) audit dispositif d'enregistrement (10),
dans lequel, si la requête d'enregistrement de localisation est reçue un nombre de fois spécifié ou plus en provenance de ladite station mobile (80) à l'intérieur d'une distance prédéterminée, le dispositif d'enregistrement (10) est configuré pour déterminer que ladite station mobile (80) doit être enregistrée.

2. Dispositif d'enregistrement (10) selon la revendication 1, dans lequel
ladite unité de détermination (11) est configurée pour déterminer d'enregistrer ladite station mobile (80) si la distance jusqu'à ladite station mobile (80) est à l'intérieur d'une distance prédéterminée.

3. Dispositif d'enregistrement (10) selon la revendication 1 ou 2, dans lequel
ladite unité de détermination (11) est configurée pour déterminer d'enregistrer ladite station mobile (80) si la durée de séjour de ladite station mobile (80) n'est pas inférieure à une durée d'une période prédéterminée.

4. Dispositif d'enregistrement (11) selon l'une des revendications 1 à 3, comprenant en outre :
une unité de calcul de distance (12) qui est configurée pour mesurer un délai de propagation à depuis ladite station mobile (80) et pour calculer la distance jusqu'à ladite station mobile (80) sur la base du délai de propagation mesuré.

5. Dispositif d'enregistrement (10) selon la revendication 4, dans lequel
ladite unité de calcul de distance (12) est configurée pour mesurer le délai de propagation lorsqu'une requête d'enregistrement de localisation est reçue en provenance de ladite station mobile (80).

6. Dispositif d'enregistrement (10) selon l'une des revendications 1 à 5, comprenant en outre :
une unité de calcul de durée de séjour (13) qui est configurée pour calculer la durée de séjour de ladite station mobile (80) sur la base d'une période pendant laquelle une requête d'enregistrement de localisation en provenance de ladite station mobile est poursuivie.

7. Dispositif d'enregistrement (10) selon l'une des revendications 5 ou 6, dans lequel
la requête d'enregistrement de localisation en provenance de ladite station mobile (80) est une requête de connexion à Contrôle de Ressource Radio, RRC, transmise via un canal physique d'accès aléatoire.

8. Dispositif d'enregistrement (10) selon l'une des revendications 1 à 7, comprenant en outre :
une unité de stockage (40) qui est configurée pour stocker un identifiant d'abonné inclus dans la requête d'enregistrement de localisation en provenance de ladite station mobile (80).

9. Dispositif d'enregistrement (10) selon la revendication 8, dans lequel
ladite unité de détermination (11) est configurée pour identifier ladite station mobile (80) sur la base de l'identifiant d'abonné stocké dans ladite unité de stockage (14) .

10. Système de communication comprenant un dispositif d'enregistrement (10) selon l'une quelconque des revendications 1 à 9 et une station mobile (80) et dans lequel on détermine si oui ou non ladite station mobile (80) est enregistrée par ledit dispositif d'enregistrement (10) sur la base d'une distance entre ledit dispositif d'enregistrement (10) et ladite station mobile (80) et d'une durée de séjour.

11. Produit de programme informatique comprenant des instructions pouvant être mises en oeuvre par ordinateur pour amener un dispositif informatique programmable à devenir configuré comme le dispositif d'enregistrement (10) de l'une quelconque des revendications 1 à 9.
